# EUROPÄISCHE PATENTANMELDUNG

(11) **EP 0 829 942 A2**
(43) Veröffentlichungstag der Anmeldung: **18.03.1998**
(21) Anmeldenummer: 97250273.6
(22) Anmeldetag: 16.09.1997
(51) Int. Cl.: H02J 13/00

(54) **Verfahren und Gerät zur Steuerung und Überwachung von elektrischen Verbrauchern**

(30) Priorität: 16.09.1996 DE 29616591 U
(71) Anmelder: Abelmann, Manfred, Dipl.-Ing., 12209 Berlin (DE)
(72) Erfinder: Abelmann, Manfred, Dipl.-Ing., 12209 Berlin (DE)

(57) **Zusammenfassung**

Die Erfindung betrifft ein Verfahren und ein Steuer- und Überwachungsgerät zur Steuerung und Überwachung von Betriebszuständen einzelner elektrischer Verbraucher eines Systems aus mehreren elektrischen Verbrauchern. Das Gerät enthält einen Netzeingang (22) und mehrere Ausgänge (16;18;20) zum Verbinden der elektrischen Verbraucher (10;12;14) mit dem Steuer- und Überwachungsgerät. Durch Schaltmittel (24;26;28) wird der Strom zu den einzelnen Verbrauchern (10;12;14) ein- und ausgeschaltet. Strom-Meßwertwandler (32,38,44,50,56;34,40,46,52,58;36,42,48,54,60) wandeln die Ströme durch die Verbraucher (10;12; 14) in entsprechende Meßwerte um. Referenzwertgeber (68;70;72) erzeugen Referenzwerte. Durch Komparatoren (62;64;66) werden die durch die Strom-Meßwedwandler (32,38,44,50,56;34,40,46,52,58;36,42,48,54,60) erzeugten Meßwerte mit den von den Referenzwertgebern (68;70;72) erzeugten Referenzwerten verglichen. Die Komparatoren (62;64;66) erzeugen von diesem Vergleich abhängige Komparatorsignale. Aktivierungseinrichtungen (80,82,88) erzeugen Aktivierungssignale zum Aktivieren der Schalter (24;26;28). Durch Ansteuerungseinrichtungen (74;76;78) werden die Schalter (24;26;28) in Abhängigkeit von den Komparatorsignalen und den Aktivierungssignalen angesteuert.

## Beschreibung

Die Erfindung betrifft ein Verfahren und ein Gerät zur Steuerung und Überwachung von elektrischen Verbrauchern.

Elektrische Verbraucher, wie beispielsweise Fernsehgeräte, Satellitenempfänger, Videorecorder oder HiFi-Anlagen sind häufig so ausgelegt, daß sie sich in mehreren Betriebszuständen befinden können. Wenn das Gerät für den eigentlich vorgesehenen Zweck im Betrieb, also eingeschaltet ist, befindet es sich in dem sogenannten normalen Betriebszustand. Der Energieverbrauch ist dann relativ groß (typischerweise 50 - 100 W/h). Wenn das Gerät nicht für den vorgesehenen Zweck im Betrieb, also ausgeschaltet ist, kann es entweder von dem Versorgungsnetz elektrisch getrennt sein, wobei es keine Energie verbraucht, oder sich in einem sogenannten Standby-Zustand befinden. In diesem Standby-Zustand ist eine Standby-Schaltung aktiv, welche die Eingabe eines Einschaltbefehls ständig abfragt. Der Energieverbrauch ist dann relativ klein (typischerweise 5 - 30W/h). Wenn das Gerät sich in dem Standby-Zustand befindet, kann es durch einen Fernsteuerungssender (remote control) eingeschaltet werden. Dies ist sehr praktisch und hat sich auch in der Praxis bewährt, da das Gerät von der Ferne eingeschaltet werden kann und die Einschalttaste an dem Gerät selbst zu diesem Zweck nicht betätigt werden muß.

In einem Raum oder in einem Haushalt befinden sich erfahrungsgemäß häufig mehrere solche Geräte, welche, wenn sie ausgeschaltet sind, sich im Standby-Zustand befinden. Da jedes Gerät mit einer eigenen Standby-Schaltung ausgerüstet ist, wird der Gesamtenergieverbrauch auch im Standby-Zustand relativ groß.

Durch die DE 195 17 861 C1 ist ein netzbetriebenes Elektrogerät bekannt, welches eine Steuerung von Betriebszuständen einzelner elektrischer Verbraucher aufweist. Es wird unterschieden zwischen programmunabhängigen Verbrauchern, welche in einem Standby-Betrieb aktiviert sind und programmabhängigen Verbrauchern, welche während eines Nutzbetriebs aktiviert sind. Beispielsweise bei einem Fernsehgerät ist der programmunabhängige Verbraucher der Empfänger von Fernbedienungen und der programmabhängige Verbraucher der Bildschirm selbst. Das Elektrogerät besitzt einen Netzeingang. An dem Netzeingang ist ein Transformator angeschlossen. Über diesen Transformator und nachgeschaltete Gleichrichter wird ein Mikroprozessor mit Gleichspannung versorgt. Der Mikroprozessor steuert Relais an, über welche die An- und Abschaltung der programmabhängigen Verbraucher vorgenommen wird.

Die DE 42 40 351 C1 beschreibt eine Standby-Schaltung für infrarot-fernbedienbare Geräte. Die Schaltung ist an das Netz angeschlossen und enthält ein Relais zur Unterbrechung der Betriebsstromversorgung. Weiterhin ist eine Steuerelektronik mit IR-Empfänger vorgesehen. Im Standby-Betrieb wird nur der IR-Empfänger und einen Mikrorechner über das Relais mit Gleichspannung versorgt. Diese Schaltung ist nur für einen einzigen Verbraucher ausgelegt.

Durch die DE 42 05 517 A1 ist eine Vorrichtung zum An- bzw. Abschalten eines ersten elektrischen Geräts in Abhängigkeit vom Stromfluß zu einem zweiten Gerät. Die Geräte sind an das Versorgungsnetz angeschlossen. Beim An- oder Abschalten des zweiten Geräts wird eine Signalspannung erzeugt. Diese Signalspannung wird mit Hilfe einer elektronischen Schaltung ausgewertet. In Abhängigkeit von dieser Auswertung wird ein Schalter betätigt, welcher das erste Gerät an- bzw. abschaltet.

Die DE 43 21 304 A1 bescheibt eine Anlage zum Steuern und Überwachen von mehreren elektrischen Geräten mittels einer einzigen Fernbedienung. Zu diesem Zweck werden alle zu überwachende Geräte mit einer Masterbox verbunden, welche über die einzige Fernbedienung gesteuert wird.

Der Erfindung liegt die Aufgabe zugrunde, den Energieverbrauch eines Systems aus mehreren elektrischen Verbrauchern im nicht eingeschalteten Zustand zu vermindern.
Erfindungsgemäß wird diese Aufgabe gelöst durch ein Steuer- und Überwachungsgerät zur Steuerung und Überwachung von Betriebszuständen einzelner elektrischer Verbraucher eines Systems aus mehreren elektrischen Verbrauchern, enthaltend
(a) einen Netzeingang für die Versorgung des Steuer- und Überwachungsgeräts und der Verbraucher,
(b) mehrere Ausgänge zum Anschluß der elektrischen Verbraucher an das Steuer- und Überwachungsgerät,
(c) Schalter an den Ausgängen zum Ein- und Ausschalten des Stromes zu den einzelnen Verbrauchern,
(d) Strom-Meßwertwandler zum Umwandeln der durch die Verbraucher fließenden Ströme in entsprechende Meßwerte,
(e) Referenzwertgeber zum Erzeugen von Referenzwerten,
(f) Komparatoren, durch welche die durch die Strom-Meßwertwandler erzeugten Meßwerte mit den von den Referenzwertgebern erzeugten Referenzwerten verglichen werden und welche von diesem Vergleich abhängige Komparatorsignale erzeugen,
(g) Aktivierungseinrichtungen zum Erzeugen von Aktivierungssignalen zum Ansteuern der Schalter, und
(h) Ansteuerungseinrichtungen zum Ansteuern der Schalter in Abhängigkeit von den Komparatorsignalen und den Aktivierungssignalen, derart, daß die Stromversorgung zu einem bestimmten Verbraucher aufrechterhalten wird, wenn der dem bestimmten Verbraucher zugeordnete Meßwert größer als der Referenzwert ist und daß im anderen Fall die Stromversorgung unterbrochen wird.

Erfindungsgemäß wird diese Aufgabe weiterhin gelöst durch ein Verfahren zur Steuerung und Überwachung von Betriebszuständen einzelner elektrischer Verbraucher eines Systems aus mehreren elektrischen Verbrauchern, mit den Verfahrensschritten:
(a) Einschalten der Ströme zu den einzelnen Verbrauchern,
(b) Erfassen der Ströme durch die einzelnen Verbraucher,
(c) Umwandeln dieser Ströme in entsprechende Meßwerte,
(d) Erzeugen von Referenzwerten,
(e) Vergleich der Meßwerte mit den erzeugten Referenzwerten,
(f) Beinflussen der Stromversorgung zu den einzelnen Verbrauchern in dem Sinne, daß
   (f₁) die Stromversorgung zu einem bestimmten Verbraucher aufrechterhalten wird, wenn der dem bestimmten Verbraucher zugeordnete Meßwert größer als der zugehörige Referenzwert ist und
   (f₂) die Stromversorgung zu einem bestimmten Verbraucher automatisch unterbrochen wird, wenn der dem bestimmten Verbraucher zugeordnete Meßwert kleiner als der zugehörige Referenzwert ist.
(g) Wiedereinschalten der Stromversorgung nach Wunsch zu einem oder mehreren bestimmten Verbrauchern.

Das Steuer- und Überwachungsgerät wird über den Netzeingang an das öffentliche Stromversorgungsnetz angeschlossen. Die von dem Steuer- und Überwachungsgerät zu steuernden und zu überwachenden Verbraucher werden direkt an das Steuer- und Überwachungsgerät über die dafür vorgesehenen Ausgänge angeschlossen.

Die Schalter zum Ein- und Ausschalten des Stromes zu den einzelnen Verbrauchern können Relais enthalten, wobei jedem Ausgang des Steuer- und Überwachungsgerätes ein Relais zugeordnet sein kann.

Durch die Strom-Meßwertwandler wird der jeweilige Strom durch die Verbraucher einzeln erfaßt. In Abhängigkeit von der jeweils erfaßten Stromstärke kann ein Meßwert in Form eines elektrischen Signals erzeugt werden.

Dieses Signal kann durch übliche Mittel aufbereitet und dem Komparator zugeführt werden.

Durch die Referenzwertgeber werden Referenzwerte erzeugt, wobei jedem Verbraucher ein Referenzwert zugeordnet sein kann. Der Referenzwert wird dabei so gewählt, daß die von den Strom-Meßwertwandlern erzeugten Meßwerte kleiner oder größer als der Referenzwert sind, je nachdem, ob sich der Verbraucher im Standby-Zustand oder im normalen Betriebszustand befindet.

Durch die Aktivierungseinrichtungen zum Erzeugen von Aktivierungssignalen zum Ansteuern der Schalter können die Verbraucher einzeln aktiviert werden. Diese Aktiverungseinrichtungen werden von der bedienenden Person dann betätigt, wenn ein bestimmter Verbraucher eingeschaltet werden soll.

Die Ansteuerungseinrichtungen können logische Verknüpfungsglieder enthalten, wobei die Schalter in Abhängigkeit von den Komparatorsignalen und den Aktivierungssignalen betätigt werden können.

Wenn Betriebszustände einzelner elektrischer Verbraucher eines Systems aus mehreren elektrischen Verbrauchern im Sinne der vorliegenden Erfindung gesteuert und überwacht werden sollen, dann werden zunächst die Ströme durch die einzelnen Verbraucher erfaßt. Diese Ströme werden in entsprechende Meßwerte umgewandelt. Referenzwerte werden erzeugt. Die Meßwerte werden mit den Referenzwerten verglichen. Wenn ein einem bestimmten Verbraucher zugeordneter Meßwert größer als der zugehörige Referenzwert ist, wird die Stromversorgung zu diesem Verbraucher aufrechterhalten. Wenn der dem bestimmten Verbraucher zugeordnete Meßwert kleiner als der zugehörige Referenzwert ist, wird die Stromversorgung zu diesem Verbraucher automatisch unterbrochen, wobei der Verbraucher durch Betätigung von Aktivierungseinrichtungen nach Wunsch wieder einschaltbar ist.

Wenn sich also ein Verbraucher im Standby-Zustand befindet, wird dieser Zustand von dem Steuer- und Überwachungsgerät erkannt. Der diesem Verbraucher zugeordnete Schalter wird dann automatisch betätigt, so daß die Netzversorgung dieses Verbrauchers unterbrochen wird. Wenn der Verbraucher wieder eingeschaltet werden soll, werden die entsprechenden Aktivierungseinrichtungen betätigt, so daß der entsprechende Schalter die Verbindung des Verbrauchers mit der Netzversorgung wieder herstellt.

Das erfindungsgemäße Steuer- und Überwachungsgerät kann mit handelsüblichen Komponenten so ausgelegt sein, daß der Energieverbrauch sehr niedrig ist und sogar unterhalb des Energieverbrauchs der einzelnen Standby-Schaltungen der Verbraucher liegt. Es hat sich sogar gezeigt, daß bei einem erfindungsgemäßen Steuer- und Überwachungsgerät, welches für acht Verbraucher ausgelegt ist, der Energieverbrauch kleiner als 2 W/h sein kann. Da der übliche Energieverbrauch für acht einzelne Standby-Schaltungen je nach Gerät ungefähr zwischen 40 und 240 W/h liegt, ist die Energieeinsparung bei der Verwendung des erfindungsgemäßen Steuer- und Überwachungsgerätes beträchtlich.

Das Steuer- und Überwachungsgerät kann eine erste Einrichtung zum Halten der Aktivierungssignale für eine vorbestimmte Zeit aufweisen. Dies bewirkt, daß der dem betroffenen Verbraucher zugeordnete Schalter für diese vorbestimmte Zeit nicht in Abhängigkeit von dem Komparatorsignal betätigt wird. Dies bedeutet, daß der betroffene Verbraucher sich für eine gewisse Zeit, beispielsweise 10 Sekunden, im Standby-Zustand befindet, ohne daß die Stromversorgung zu diesem Verbraucher unterbrochen wird. Wenn der Verbraucher innerhalb dieser Zeitspanne tatsächlich eingeschaltet, also in den normalen Betriebszustand versetzt wird, dann bleibt der Verbraucher in diesem normalen Betriebszustand. Wenn der Verbraucher nicht innerhalb dieser Zeitspanne in den normalen Betriebszustand versetzt wird, dann wird die Stromversorgung zu dem betroffenen Verbraucher automatisch wieder unterbrochen.

Diese erste Einrichtung ist insbesondere dann vorteilhaft, wenn der Verbraucher nicht unmittelbar durch die Aktivierungssignale des erfindungsgemäßen Steuer- und Überwachungsgerätes in dem normalen Betriebszustand versetzt wird, sondern in den Standby-Zustand. Der Verbraucher kann dann also innerhalb der vorbestimmten Zeitspanne wie sonst üblich eingeschaltet werden.

Das Steuer- und Überwachungsgerät kann weiterhin eine zweite Einrichtung zum dauerhaften Halten der Aktivierungssignale aufweisen. Dadurch wird die Funktion des automatischen Unterbrechens der Stromversorgung zu dem betroffenen Verbraucher außer Kraft gesetzt, bis dieses dauerhafte Halten wieder aufgelöst wird. Dies ist beispielsweise dann zweckmäßig, wenn ein Videorecorder und ein Satellitenempfänger für eine längere Zeit in Standby-Betrieb bleiben sollen, um eine Sendung über einen Zeitschalter in dem Videogerät zu einem bestimmten Zeitpunkt aufzunehmen.

Das erfindungsgemäße Steuer- und Überwachungsgerät kann in einem Gehäuse untergebracht werden, das von außen einer handelsüblichen Steckerleiste ähnlich ist. Teile der Aktivierungseinrichtungen können in einem separaten Gehäuse untergebracht sein. Diese Teile können die Betätigungselemente des Steuer- und Überwachungsgerätes enthalten, wobei die Eingangssignale als elektromagnetische Wellen, z.B. Infrarotwellen, oder als elektrische Signale über elektrische Leitungen an die übrigen Komponenten der Aktivierungseinrichtungen des Steuer- und Überwachungsgerätes übertragen werden können. Dadurch können die meisten Komponenten des Steuer- und Überwachungsgerätes in einem Hauptgehäuse untergebracht werden, das unauffällig oder sogar versteckt in dem Raum aufgestellt werden kann. Die bedienende Person muß nur Zugang zu dem zweiten, separaten Gehäuse haben, das sehr klein ausgestaltet und unauffällig aufgestellt werden kann. In dem zweiten, separaten Gehäuse kann beispielsweise ein Infrarot-Empfängersensor vorhanden sein, wobei das Steuer- und Überwachungsgerät mittels eines Infrarot-Fernsteuersenders bedient werden kann. Dadurch sind die Aktivierungseinrichtungen also fernsteuerbar.

Die Aktivierungseinrichtungen können Signalverarbeitungsmittel aufweisen, durch welche die Eingangssignale in Übereinstimmung mit einem Standardcode umwandelbar sind. Diese Signalverarbeitungsmittel können beispielsweise serielle Eingangssignale in paralelle Signalen nach dem RC5-Code (von Philips) umwandeln. Dies ermöglicht die Verwendung eines handelsüblichen Fernbedienungsgerätes.

Die Referenzwertgeber können einstellbare Potentiometer enthalten, welche Referenzwerte in Form von Spannungen liefern. Die Referenzwerte können individuell für jeden einzelnen Verbraucher eingestellt werden, so daß eine optimale Anpassung an die Gegebenheiten des jeweiligen Verbrauchers möglich ist. Dies ist dann vorteilhaft, wenn die Stromstärken durch die einzelnen Verbraucher im Standby-Zustand unterschiedlich groß sind.

Das Steuer- und Überwachungsgerät kann einen Microcontroller enthalten. Dieser Microcontroller kann die Funktionen der Referenzwerterzeugung, des Vergleichs der Meßwerte mit den Referenzwerten sowie die Ansteuerung der Schalter übernehmen.

Ausführungsbeispiele der Erfindung sind nachstehend unter Bezugnahme auf die zugehörigen Zeichnungen näher erläutert.
- Fig. 1: ist eine schematische Darstellung und zeigt ein erstes Ausführungsbeispiel des erfindungsgemäßen Steuer- und Überwachungsgerätes als Blockschaltbild.
- Fig. 2-4: ist ein Schaltplan und zeigt ein Beispiel des ersten Ausführungsbeispiels des erfindungsgemäßen Steuer- und Überwachungsgerätes.
- Fig. 5: ist eine schematische Darstellung und zeigt ein zweites Ausführungsbeispiel des erfindungsgemäßen Steuer- und Überwachungsgerätes als Blockschaltbild.

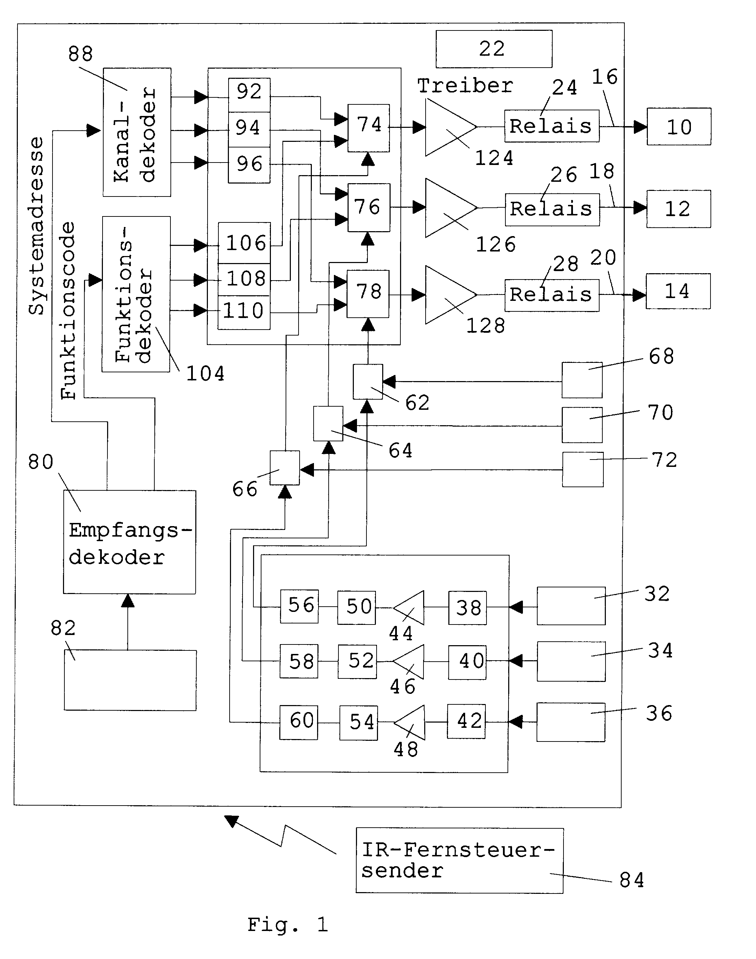

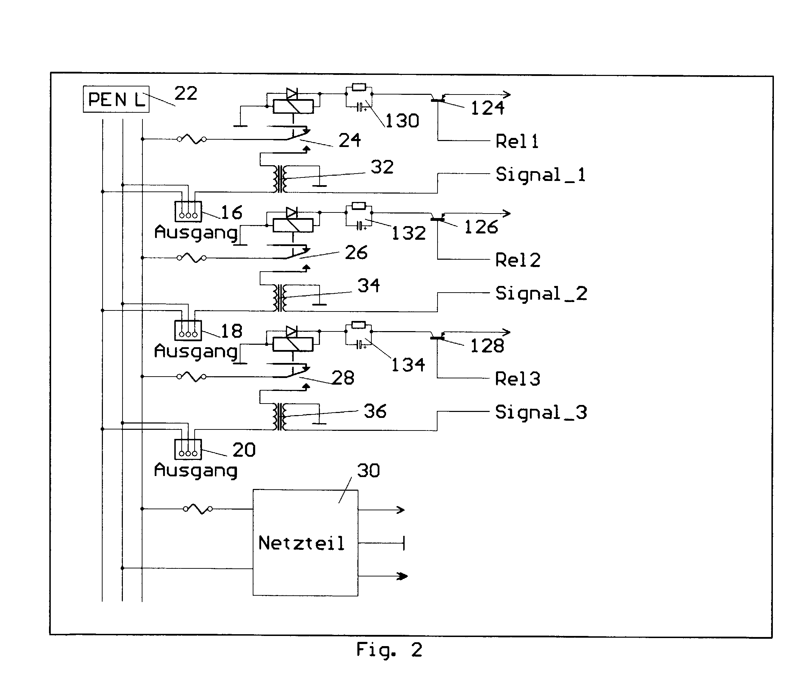

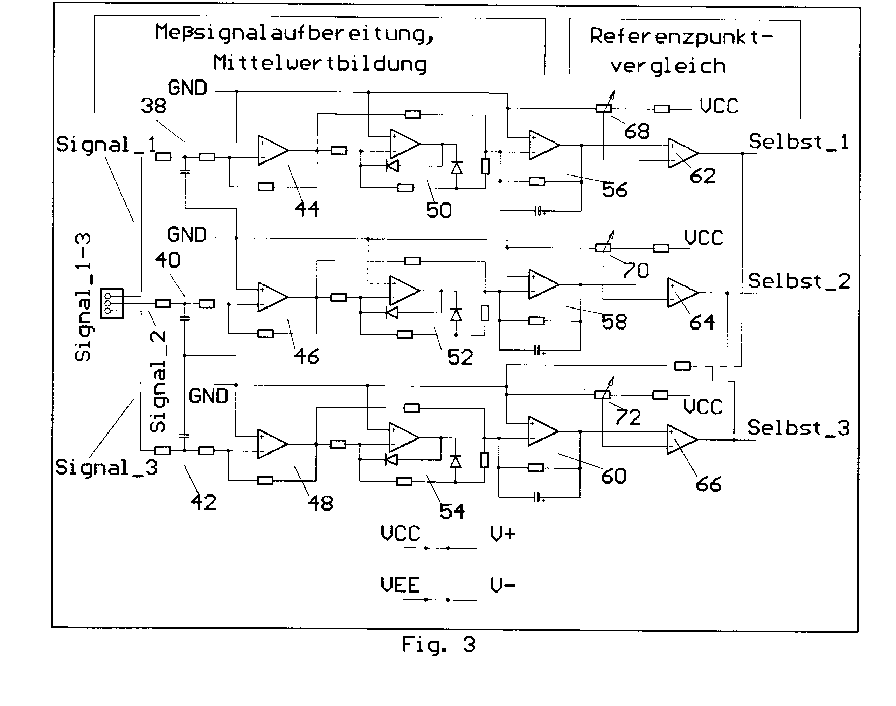

Fig. 1 zeigt ein erstes Ausführungsbeispiel des erfindungsgemäßen Steuer- und Uberwachungsgerätes, welches für drei Verbraucher 10, 12 und 14 ausgelegt ist. Der in Fig. 2-4 dargestellte, zugehörige beispielhafte Schaltplan ist ebenfalls für drei Verbraucher ausgelegt. Dies dient der Übersicht der Darstellung. Die Anzahl der Verbraucher kann sowohl kleiner als auch größer sein. Die Verbraucher 10, 12 und 14 sind mit Ausgängen 16, 18 bzw. 20 des Steuer- und Überwachungsgerätes verbunden. Mit 22 ist ein Netzeingang bezeichnet, über welchen das Steuer- und Überwachungsgerät an das öffentliche Stromversorgungsnetz angeschossen wird. Mit dem Netzeingang 22 sind die Ausgänge 16, 18 und 20 über jeweils ein Relais 24, 26 bzw. 28 verbunden. Mit dem Netzeingang 22 ist weiterhin ein Netzteil 30 (Fig. 2) verbunden, welches die für die Komponenten des Steuer- und Überwachungsgerätes notwendigen Betriebsspannungen (beispielsweise ±5V) liefert. Die Relais 24, 26 und 28 stellen Schalter zum Ein- und Ausschalten des Stromes zu den jeweiligen Verbrauchern 10, 12 bzw. 14 dar. Wenn beispielsweise der Kontakt des Relais 24 geschlossen ist, ist der Verbraucher 10 mit dem Versorgungsnetz verbunden, wenn der Kontakt des Relais 24 nicht geschlossen ist, ist der Verbraucher 10 von dem Versorgungsnetz getrennt.

Durch jeweils einen Strom-Spannungswandler (I-U-Wandler) 32, 34 bzw. 36 wird der Strom durch den jeweils zugehörigen Verbraucher 10, 12 bzw. 14 abgegriffen und in eine der jeweiligen Stromstärke entsprechende Spannung umgewandelt. Die Strom-Spannungswandler 32, 34 und 36 sind so ausgelegt, daß die Steuerungkreise galvanisch von dem Netzkreis getrennt sind. Diese Spannungen werden in einer Meßwert-Aufbereitungseinheit in bekannter und hier nicht näher dargestellter Weise durch Filter 38, 40 bzw. 42 gefiltert, durch Verstärker 44, 46 bzw. 48 verstärkt, durch Gleichrichter 50, 52 bzw. 54 gleichgerichtet und durch Integratoren 56, 58 bzw. 60 geglättet. Die so jeweils erhaltenen Spannungswerte werden als Meßwerte der jeweiligen Ströme durch die Verbraucher 10, 12 bzw 14 auf jeweils ein ersten Eingang eines Komparators 62, 64 bzw. 66 aufgeschaltet.

Referenzwertgeber 68, 70 und 72 sind vorgesehen, welche in dem in Fig. 2-4 dargestellten Beispiel des in Fig. 1 dargestellten ersten Ausführungsbeispiels von Potentiometern gebildet sind. Die Ausgangssignale dieser Referenzwertgeber 68, 70 und 72 sind einstellbar und werden auf den zweiten Eingang des jeweils zugehörigen Komparators 62, 64 bzw. 66 aufgeschaltet.

Die Ausgangssignale der Komparatoren 62, 64 bzw. 66 werden auf jeweils einen ersten Eingang jeweils eines Verknüpfungsgliedes 74, 76 bzw. 78 aufgeschaltet. In dem in Fig. 2-4 dargestellten Beispiel handelt es sich hierbei um NOR-Glieder mit drei Eingängen und einem Ausgang.

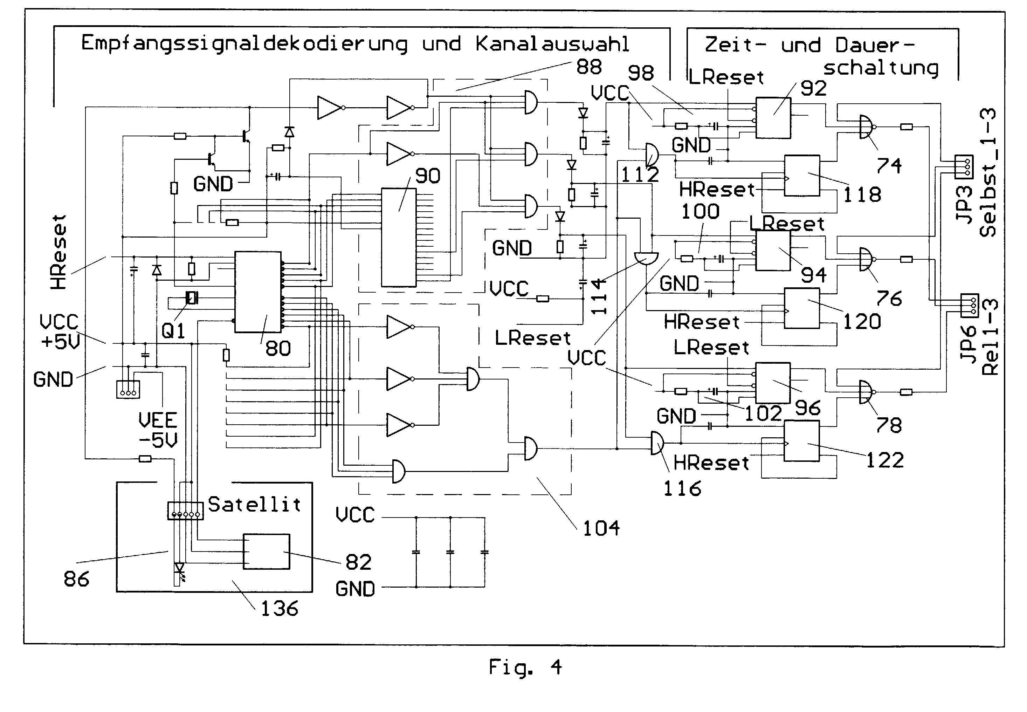

Ein Empfangsdekoder ist in Fig. 1 und Fig. 4 mit 80 bezeichnet. Der Empfangsdekoder 80 wird von Signalen von einem Infrarot-Empfängersensor 82 beaufschlagt, welcher in dem in Fig. 2-4 dargestellten Beispiel als Photodetektor mit integriertem Verstärker ausgebildet ist. Der Infrarot-Empfängersensor 82 erhält Signale von einem Infrarot-Fernsteuersender 84 (Fig. 1), welcher manuell bedient wird. Über den Infrarot-Fernsteuersender 84 sind verschiedene Funktionen, so wie anzusprechender Verbraucher anwählbar. Dies kann beispielsweise über (in den Figuren nicht dargestellten) Tasten erfolgen. Durch eine optische Anzeige, welche in Fig. 4 durch eine Leuchtdiode 86 realisiert ist, wird ein optisches Signal erzeugt, wenn der Infrarot-Empfängersensor 82 tatsächlich ein gültiges Signal von dem Infrarot-Fernsteuersender 84 erhält.

Der Empfangsdekoder 80 in dem in Fig. 1 dargestellten Ausführungsbeispiel setzt serielle Signale von dem Infrarot-Empfängersensor 82 in parallele Signale nach einem bestimmten Code um und verstärkt dieses Empfangsprotokoll. Dieser Code kann ein Standardcode sein, beispielsweise der RC5-Code Standard von Philips. In diesem Fall kann also ein handelsüblicher Infrarot-Fernsteuersender verwendet werden.

In dem in Fig. 2-4 dargestellten Beispiel des ersten Ausführungsbeispiels erzeugt der Empfangsdekoder 80 einen 5-Bit-Systemadressenwert und einen 6-Bit-Funktionsadressenwert. Mit dem 5-Bit-Systemadressenwert wird der dem betroffenen Verbraucher entsprechende Kanal aktiviert. Zu diesem Zweck wird der 5-Bit-Systemadressenwert einem Kanaldekoder 88 zugeführt. In dem Beispiel in Fig. 2-4 enthält der Kanaldekoder 88 einen Demultiplexer 90 mit 16 Ausgängen, von welchen in dem Beispiel nur drei belegt sind, und logische Verknüpfungsglieder. Die Ausgangssignale des Kanaldekoders 88 werden durch dem Kanaldekoder 88 nachgeschaltete elektronische Komponenten verarbeitet und als Impulssignale auf Verzögerungsglieder 92, 94 und 96 aufgeschaltet. Die Anzahl der Verzögerungsglieder 92, 94 und 96 entspricht der Anzahl der Ausgänge des Demultiplexers 90 bzw. der Anzahl der Ausgänge 16, 18 und 20 des Steuer- und Überwachungsgerätes. In dem Beispiel in Fig. 2-4 werden die Verzögerungsglieder 92, 94 und 96 von Monovibratoren gebildet. An je einem Ausgang erzeugen die Monovibratoren einen Langzeitimpuls, dessen zeitliche Länge über RC-Glieder 98, 100 bzw. 102 einstellbar ist. Die Ausgänge der Verzögerungsglieder 92, 94 und 96 sind mit dem zweiten Eingang des jeweils zugehörigen Verknüpfungsgliedes 74, 76 bzw. 78 verbunden.

Mit dem von dem Empfangsdekoder 80 erzeugten 6-Bit-Funktionsadressenwert wird eine Funktion "Dauer ein/aus" gesteuert. Zu diesem Zweck wird der 6-Bit-Funktionsadressenwert einem Funktionsdekoder 104 zugeführt. Der Funktionsdekoder 104 kann beispielsweise durch mehrere Verknüpfungsgelieder realisiert werden (Fig.4). Der Ausgang des Funktionsdekoders 104 ist mit drei Umschaltgliedern 106, 108 und 110 verbunden. Die Anzahl der Umschaltglieder 106, 108 und 110 entspricht der Anzahl der Ausgänge 16, 18 und 20 des Steuer- und Überwachungsgerätes. In dem Beispiel in Fig. 2-4 enthalten die Umschaltglieder 106, 108 und 110 jeweils ein UND-Glied 112, 114 bzw. 116 und jeweils ein Flip-Flop-Glied (T-Flip-Flop) 118, 120 bzw. 122. Jeweils ein Eingang der UND-Glieder 112, 114 und 116 ist mit dem Ausgang des Funktionsdekoders 104 verbunden. Der jeweilige andere Eingang der UND-Glieder 112, 114 und 116 ist mit dem zugehörigen Ausgang des Kanaldekoders 88 verbunden. Die Ausgänge der Umschaltglieder 106, 108 und 110 (bzw. der Flip-Flop-Glieder 118, 120 und 122) sind mit dem dritten Eingang des jeweils zugehörigen Verknüpfungsgliedes 74, 76 bzw. 78 verbunden.

Die Ausgänge der Verknüpfungsglieder 74, 76, 78 sind über jeweils einem Treiber 124, 126 und 128 mit dem jeweils zugehörigen Relais 24, 26 bzw. 28 verbunden. In dem in Fig. 2-4 dargestellten Beispiel befindet sich jeweils ein Hochpaßfilter 130, 132 bzw. 134 zwischen dem Treiber 124, 126 bzw. 128 und dem Relais 24, 26 bzw. 28.

Weitere übliche elektronische Signalverarbeitungskomponenten und Teilschaltungen (z.B. Reset-Schaltung) zur Realisierung des erfindungsgemäßen Steuer- und Überwachungsgerätes sind in dem Fig. 2-4 dargestellt. Solche Komponenten und Schaltungen sind dem Fachmann bekannt und hier nicht näher beschrieben.

In dem in Fig. 2-4 dargestellten Beispiel des ersten Ausführungsbeispiels ist angedeutet, daß der Photodetektor 82 und die optische Anzeige 86 in einem separaten Gehäuse 136 untergebracht sind. Dadurch kann dieses Gehäuse 136 als "Satellit" getrennt von dem Rest des Steuer- und Überwachungsgerätes aufgestellt werden.

Bei der folgenden Beschreibung der Wirkungsweise des dargestellten ersten Ausführungsbeispiels des erfindungsgemäßen Steuer- und Überwachungsgerätes wird nur die Wirkung bzgl. eines Verbrauchers 10 der Verbraucher 10, 12 und 14 betrachtet, deren Betriebszustände gesteuert und überwacht werden sollen. Die Wirkungsweise bzgl. der anderen Verbraucher 12 und 14 ist identisch.

Zunächst wird der Netzstecker des Verbrauchers 10 an dem Steuer- und Überwachungsgerät angeschlossen, so daß die Stromversorgung des Verbrauchers 10 über das entsprechende Relais 24 des Steuer- und Überwachungsgerätes erfolgen kann.

An dem diesem Verbraucher 10 zugeordneten Referenzwertgeber 68 wird ein Referenzwert eingestellt. Dies erfolgt in dem in Fig. 2-4 dargestellten Beispiel des ersten Ausführungsbeispiels durch Einstellen des dem betroffenen Verbraucher 10 zugeordneten Potentiometers 68. Der Referenzwert wird so gewählt, daß er sich zwischen einem ersten, der größten Stromstärke durch den Verbraucher 10 im Standby-Zustand entsprechenden Wert und einem zweiten, der kleinsten Stromstärke durch den Verbraucher 10 im normalen Betriebszustand entsprechenden Wert befindet. Dieser Referenzwert wird dem Komparator 62 zugeführt.

Das Steuer- und Überwachungsgerät überprüft den aktuellen Betriebszustand des Verbrauchers 10. Dies erfolgt dadurch, daß die Stromstärke durch den Verbraucher 10 von dem Strom-Spannungsumwandler 32 abgegriffen und in eine entsprechende Spannung umgewandelt wird. Diese Spannung wird in der Meßsignal-Aufbereitungseinheit 38, 44, 50, 56 gefiltert, verstärkt, gleichgerichtet und geglättet und als Gleichspannungs-Meßsignal dem Komparator 62 zugeführt. Der Komparator vergleicht nun dieses Meßsignal mit dem von dem Referenzwertgeber 68 erhaltenen Referenzwert. In Abhängigkeit von dem Ergebnis dieses Vergleichs liefert der Komparator 62 an seinem Ausgang ein erstes, dem Standby-Zustand entsprechendes Signal oder ein zweites, dem normalen Betriebszustand entsprechendes Signal. Wenn der Verbraucher 10 von dem Versorgungsnetz getrennt ist, liefert der Komparator 62 ein Signal, das sich von dem Standby-Zustand nicht unterscheidet. Das Ausgangssignal des Komparators 62 wird dem Verknüpfungsglied 74 als erstes Eingangssignal zugeführt.

Es sei zunächst angenommen, daß keine dem Verbraucher 10 betreffenden Aktivierungssignale von dem IR-Empfängersensor 82 geliefert werden. Dann sind die beiden anderen Eingänge des Verknüpfungsgliedes 74 nicht aktivert. Das von dem Verknüpfungsglied 74 über den Treiber 124 an das Relais 24 gelieferte Signal hängt dann nur von dem Betriebszustand des Verbrauchers 10 ab. Wenn sich der Verbraucher 10 im normalen Betriebszustand befindet, das Relais 24 also angezogen hat, erzeugt der Treiber 124 ein Haltestrom, der das Relais 24 in dem leitenden Zustand hält. Durch den Hochpaßfilter 130 (Fig. 2) wird dieser Haltestrom reduziert, so daß der Energieverbrauch möglichst klein gehalten wird. Es fließt also ein kleinerer Haltestrom als Einschaltstrom durch das Relais 24. Wenn der Verbraucher 10 in den Standby-Zustand umgeschaltet wird, erzeugt der Komparator 62 einen Spannungspegel, der das Relais 24 in den nicht-leitenden Zustand versetzt, wenn das Relais 24 noch leitend ist. Die Netzversorgung des Verbrauchers 10 wird unterbrochen.

Wenn der Verbraucher 10 wieder eingeschaltet werden soll, betätigt die bedienende Person den Infrarot-Fernsteuersender 84 so, daß über den Empfangsdekoder 80 bzw. den Kanaldekoder 88 auf dem zu dem Verbraucher 10 gehörenden Monovibrator 92 ein Signalimpuls aufgeschaltet wird. Über den Monovibrator 92 wird dann der zweite Eingang des Verknüpfungsgliedes 74 aktivert. Dies führt dazu, daß an dem Ausgang des Verknüpfungsgliedes 74 ein Signal erscheint, das über den Treiber 124 das Relais 24 in den leitenden Zustand versetzt. Der Verbraucher 10 wird eingeschaltet. Wenn der Verbraucher 10 durch dieses Einschalten in den Standby-Zustand versetzt wird, muß der Verbraucher 10 innerhalb der durch RC-Glied 98 vorbestimmten Zeitspanne in den normalen Betriebszustand versetzt werden. Wenn dies nicht erfolgt, wird das Relais 24 automatisch wieder in den nicht-leitenden Zustand versetzt.

Innerhalb der Zeitspanne, in der der betroffene Kanal angesteuert und das entsprechende Relais 24 leitend ist, kann über den Infrarot-Fernsteuersender 84, den Infrarot-Empfängersensor 82, den Empfangsdekoder 80, den Funktionsdekodierer 104 und das Umschaltglied 106 (bzw. das UND-Glied 112 und das Flip-Flop-Glied 118) ein Befehl "Dauer Ein/Aus" ausgelöst werden. Dabei ist das Flip-Flop-Glied 118 so ausgelegt, daß es durch ein solches Signal immer umgeschaltet wird. Wenn die Dauerfunktion ausgeschaltet ist, wird sie durch den Befehl eingeschaltet und umgekehrt.

Es sei noch erwähnt, daß die Ausgänge 16, 18 und 20 des Steuer- und Überwachungsgerätes auch zum Anschließen von Verbrauchern ohne Standby-Zustandsfunktion geeignet sind. Über die "Dauer Ein/Aus"-Funktion können solche Verbraucher dann über das Steuer- und Überwachungsgerät ein- und ausgeschaltet werden, gegebenenfalls über den Fernsteuersender 84.

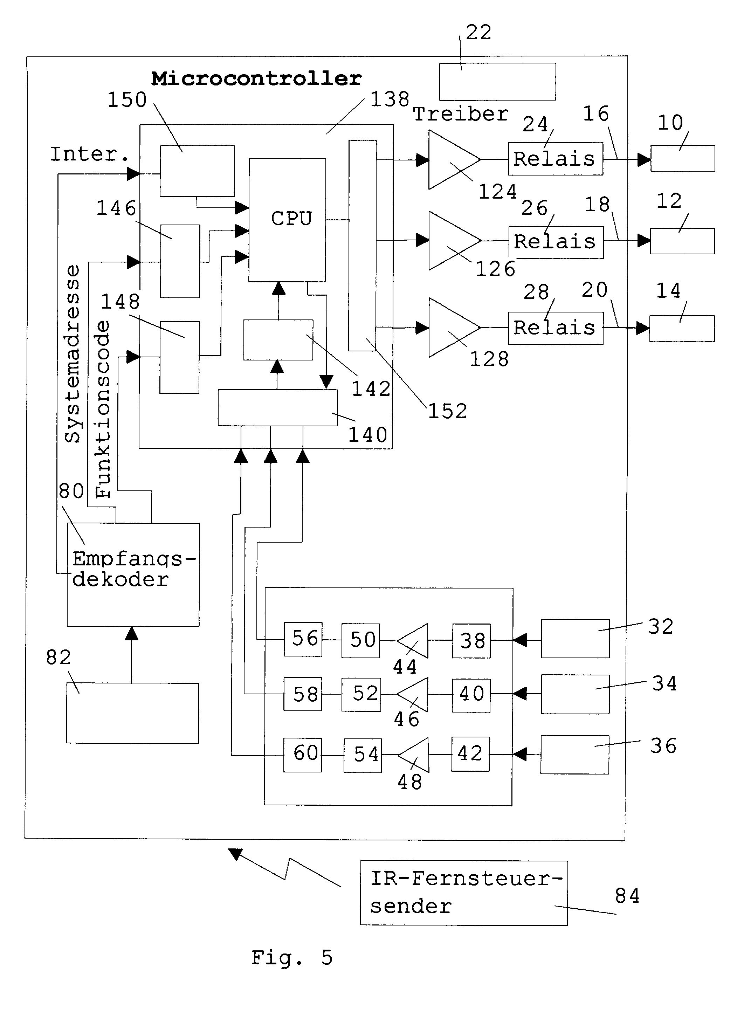

Fig. 5 zeigt ein zweites Ausführungsbeispiel des erfindungsgemäßen Steuer- und Überwachungsgerätes. Entsprechende Teile sind in Fig. 5 mit den gleichen Bezugszeichen wie in Fig. 1 versehen. Das zweite Ausführungsbeispiel des Steuer- und Überwachungsgerätes unterscheidet sich von dem ersten Ausführungsbeispiel nur indem die Referenzwerteinstellung, der Vergleich des Meßwertes mit dem Referenzwert, die Kanal- und Funktionsdekodierung und die Verknüpfung der Befehlssignale durch einen Microcontroller 138 erfolgt. (Die Funktion eines Microcontrollers ist dem Fachmann allgeimein bekannt, so daß auf eine Darstellung des zweiten Ausführungsbeispiels anhand eines Schaltplans ähnlich Fig. 2-4 verzichtet worden ist.)

Das zweite Ausführungsbeispiel des Steuer- und Überwachungsgerätes ist ebenfalls für drei Verbraucher 10, 12 und 14 ausgelegt. Die Verbraucher 10, 12 und 14 sind mit Ausgängen 16, 18 bzw. 20 des Steuer- und Überwachungsgerätes verbunden. Mit 22 ist ein Netzeingang bezeichnet, über welchen das Steuer- und Überwachungsgerät an das öffentliche Stromversorgungsnetz angeschossen wird. Mit dem Netzeingang 22 sind die Ausgänge 16, 18 und 20 über jeweils ein Relais 24, 26 bzw. 28 verbunden. Mit dem Netzeingang 22 ist weiterhin ein (in Fig. 5 nicht dargestelltes) Netzteil verbunden, welches die für die Komponenten des Steuer- und Überwachungsgerätes notwendige Betriebsspannung (beispielsweise ±5 V) liefert.

Durch jeweils einen Strom-Spannungswandler (I-U-Wandler) 32, 34 bzw. 36 wird der Strom durch den jeweils zugehörigen Verbraucher 10, 12 bzw. 14 abgegriffen und in eine der jeweiligen Stromstärke entsprechende Spannung umgewandelt. Diese Spannungen werden in einer Meßwert-Aufbereitungseinheit durch Filter 38, 40 bzw. 42 gefiltert, durch Verstärker 44, 46 bzw. 48 verstärkt, durch Gleichrichter 50, 52 bzw. 54 gleichgerichtet und durch Integratoren 56, 58 bzw. 60 geglättet.

Wie in Fig. 1 ist mit 80 ein Empfangsdekoder bezeichnet. Der Empfangsdekoder 80 wird von Signalen von einem Infrarot-Empfängersensor 82 beaufschlagt. Der Infrarot-Empfängersensor 82 erhält Signale von einem Infrarot-Fernsteuersender 84, welcher manuell bedient wird. Über den Infrarot-Fernsteuersender 84 sind verschiedene Funktionen, wie anzusprechender Verbraucher anwählbar.

Der Empfangsdekoder 80 setzt serielle Signale von dem Infrarot-Empfängersensor 82 in parallele Signale nach einem bestimmten Code um und verstärkt dieses Empfangsprotokoll. Dieser Code kann ein Standardcode sein. Der Empfangsdekoder 80 erzeugt einen 5-Bit-Systemadressenwert und einen 6-Bit-Funktionsadressenwert. Mit dem 5-Bit-Systemadressenwert wird der dem betroffenen Verbraucher entsprechende Kanal aktiviert. Mit dem 6-Bit-Funktionsadressenwert wird eine Funktion "Dauer ein/aus" gesteuert.

Bis hier entspricht die Beschreibung des in Fig.5 dargestellten zweiten Ausführungsbeispiels der Beschreibung des ersten Ausführungsbeispiels.

In dem in Fig. 5 beschriebenen Ausführungsbeispiel ist ein Microcontroller 138 vorgesehen. Außer dem Prozessor (CPU) enthält der Microcontroller als wesentliche Komponenten einen Multiplexer 140, einen Analog-Digital-Wandler 142, einen ersten und einen zweiten Eingabeport 146 und 148, eine Unterbrechungseinheit 150 und einen Ausgabeport 152.

Die von der Meßwert-Aufbereitungseinheit jeweils erhaltenen Spannungswerte werden als Meßwerte der jeweiligen Ströme durch die Verbraucher 10, 12 bzw 14 nicht wie in dem ersten Ausführungsbeispiel auf Komparatoren aufgeschaltet, sondern dem Multiplexer 140 des Microcontrollers 138 zugeführt. Der Ausgang des Multiplexers 140 ist mit dem Eingang des Analog-Digital-Wandlers 142 verbunden, dessen Ausgang mit dem Prozessor des Microcontrollers 138 verbunden ist.

Der von dem Empfangsdekoder 80 erzeugte 5-Bit-Systemadressenwert wird dem Prozessor des Microcontrollers 138 über den ersten Eingabeport 146 zugeführt. Der von dem Empfangsdekoder 80 erzeugte 6-Bit-Funktionsadressenwert wird dem Prozessor des Microcontrollers 138 über den zweiten Eingabeport 148 zugeführt. Der Empfangsdekoder erzeugt auch ein Unterbrechungssignal, das dem Prozessor des Microcontrollers 138 über die Unterbrechungseinheit 150 zugeführt wird.

Der Ausgabeport 152 des Microcontrollers 138 ist über jeweils einen Treiber 124, 126 und 128 mit dem den Verbrauchern 10, 12 und 14 jeweils zugehörigen Relais 24, 26 bzw. 28 verbunden.

Wie in dem ersten Ausführungsbeispiel kann auch hier der Infrarot-Empfängersensor 82 in einem separaten Gehäuse untergebracht sein, das als "Satellit" getrennt von dem Rest des Steuer- und Überwachungsgerätes aufgestellt werden kann.

Im folgenden sollen hauptsächlich nur die Aspekte der Wirkungsweise des in Fig. 5 dargestellten zweiten Ausführungsbeispiels des erfindungsgemäßen Steuer- und Überwachungsgerätes beschrieben werden, welche sich von der Wirkungsweise des ersten Ausführungsbeispiels unterscheiden. Das erfindungsgemäße Steuer- und Überwachungsgerät wird an dem öffentlichen Stromversorgungsnetz angeschlossen. Die Verbrauchernetzstecker der einzelnen Verbraucher 10, 12 und 14 verbindet man mit jeweils einem Ausgang 16, 18 bzw. 20.

Beim erstmaligen Einschalten eines Kanals (z.B. des Verbrauchers 10) an dem erfindungsgemäßen Steuer- und Überwachungsgerätes wird das entsprechende Relais 24 für einen gewissen Zeitraum (z.B. 60 s) angesteuert, so daß der Verbraucher 10 mit dem Netz verbunden wird. Während dieser Zeitspanne wird der Vebraucher in den Standby-Zustand gebracht.

Das Empfangen eines gültigen Ubertragungsprotokolls im Empfangsdekoder 80 löst einen Interrupt beim Microcontroller 138 aus. Gleichzeitig werden ein Systemadressenwert, in dem die Information für die Kanalauswahl enthalten ist und ein Funktionsadressenwert, der z.B. die Information über die Funktion "Dauer Ein/Aus" enthält, übertragen. Aus dem Systemadressenwert ermittelt der Microcontroller 138 das Relais (z.B. Relais 24), welches angesteuert werden soll und somit eine Verbindung des Verbrauchers (z.B. Verbraucher 10) mit dem Netz herstellt.

Nach Ermittlung des Ausgangskanals (z.B. Ausgang 16) fragt der Microcontroller 138 eine spezielle Speicherstelle (Referenzwertzustandsregister) ab, in der die Information über einen schon existierenden Referenzwert gespeichert ist. Ist noch kein Referenzwert gespeichert, wird das dem Kanal zugehörige Relais 24 während des oben genannten Zeitraums angesteuert. Durch den Stromfluß durch den Verbraucher 10 wird ein Meßwert über den Strom-Meßwertwandler erzeugt, der dem Microcontroller 138 an dem zugehörigen Eingang des im Microcontroller 138 integrierten Multiplexers 140 zugeführt wird.

Der Prozessor des Microcontrollers 138 sorgt durch Kodierung des Multiplexers 140 dafür, daß der Meßwert an den ebenfalls im Microcontroller 138 integrieten Analog-Digital-Wandler 142 weitergegeben wird. Der Analog-Digital-Wandler 142 wandelt den Meßwert ständig um.

Nach der zuvor genannten Zeitspanne wird der dem Standby-Zustand entsprechende Meßwert als eingeschwungen angenommen und vom Microcontroller 138 in einer internen Speicherzelle als dem Verbraucher (z.B. Verbraucher 10) zugehöriger Referenzwert gespeichert. Ebenfalls wird ein Eintrag in das Referenzwertzustandsregister, in dem die Information darüber steht, für welchen Ausgangskanal schon Referenzwerte bestehen, gebracht. Danach schaltet sich der Kanal automatisch aus.

Soll der Ausgangskanal wieder eingeschaltet werden, muß erneut ein gültiges Protokoll den Aktivierungseinrichtungen zugeführt werden. Der Microcontroller 138 erhält erneut einen Interrupt, einen Systemadressenwert und einen Funktionsadressenwert. Der Microcontroller 138 fragt nach Ermittlung des anzusprechenden Ausgangskanales das Referenzwertzustandsregister ab und mit der Information über einen schon existierenden Referenzwert aktiviert der Microcontroller 138 das dem Kanal zugehörige Relais (z.B. Relais 24) für eine Zeitspanne (z.B. 20 s). Der durch den Verbraucher (z.B. Verbraucher 10) fließende Strom erzeugt einen Meßwert, der dem Prozessor des Microcontrollers 138 über den Strom-Meßwertwandler 32, den Multiplexer 140 und den Analog-Digital-Wandler 142 zugeführt wird. Der Prozessor des Microcontrollers 138 vergleicht den Meßwert mit dem gespeicherten Referenzwert und entscheidet, daß der entsprechende Relaiskontakt geschlossen bleibt, wenn der Referenzwert kleiner als der Meßwert ist und daß der entsprechende Relaiskontakt geöffnet wird, wenn der Referenzwert größer als der Meßwert ist.

Wir gehen jetzt davon aus, daß ein oder mehrere Verbraucher sich im normalen Betriebszustand befinden.

Der Microcontroller 138 fragt ständig nacheinander die Meßwerte der aktivierten Ausgänge ab und vergleicht diese mit den zugehörigen Referenzwerten. Sollte einer der Meßwerte unter den zugehörigen Referenzwert fallen, wird sofort der entsprechende Verbraucher vom Netz getrennt.

Wird der letzte Verbraucher vom Netz getrennt oder ist noch kein Verbraucher eingeschaltet worden, bleibt der Microcontroller 138 für eine gewisse Zeitspanne (z.B. 60 s) in seinem normalen Arbeitsmodus. Sollte während dieser Zeitspanne kein gültiger Übertragungscode den Aktivierungseinrichtungen zugeführt werden, schalten sich einige Teile des Microcontrollers 138 automatisch ab und der Microcontroller 138 befindet sich im Idle-Mode. Dies bietet den Vorteil, daß sich der Eigenenergiebedarf des Microcontrollers 138 erheblich reduziert.

Der Microcontroller 138 wird wieder in den normalen Arbeitsmodus gebracht, indem die Aktivierungseinrichtungen ein gültiges Übertragungsprotokoll empfangen und diese ein Interruptsignal an den Microcontroller 138 senden.

Bei dem dargestellten zweiten Ausführungsbeispiel ist der Microcontroller 138 sehr einfach aufgebaut. Bei jeder Netztrennung des erfindungsgemäßen Steuer- und Überwachungsgerätes gehen die Referenzwerte für die Verbraucher verloren. Dies kann beispielsweise dadurch verhindert werden, daß ein RAM-Speicher und Energiepuffer vorgesehen werden.

## Patentansprüche

1. Steuer- und Überwachungsgerät zur Steuerung und Überwachung von Betriebszuständen einzelner elektrischer Verbraucher eines Systems aus mehreren elektrischen Verbrauchern (10;12;14), enthaltend
(a) einen Netzeingang (22) für die Versorgung des Steuer- und Überwachungsgeräts und der Verbraucher (10;12;14),
(b) mehrere Ausgänge (16;18;20) zum Anschluß der elektrischen Verbraucher (10;12;14) an das Steuer- und Überwachungsgerät,
(c) Schalter (24;26;28) an den Ausgängen (16;18;20) zum Ein- und Ausschalten des Stromes zu den einzelnen Verbrauchern (10;12;14),
(d) Strom-Meßwertwandler (32,38,44,50,56;34,40,46,52,58;36,42,48,54, 60) zum Umwandeln der durch die Verbraucher (10;12;14) fließenden Ströme in entsprechende Meßwerte,
(e) Referenzwertgeber (68;70;72) zum Erzeugen von Referenzwerten,
(f) Komparatoren (62;64;66), durch welche die durch die Strom-Meßwertwandler (32,38,44,50,56;34,40,46,52,58;36,42,48,54,60) erzeugten Meßwerte mit den von den Referenzwertgebern (68;70;72) erzeugten Referenzwerten verglichen werden und welche von diesem Vergleich abhängige Komparatorsignale erzeugen,
(g) Aktivierungseinrichtungen (80,82,88) zum Erzeugen von Aktivierungssignalen zum Ansteuern der Schalter (24;26;28), und
(h) Ansteuerungseinrichtungen (74;76;78) zum Ansteuern der Schalter (24;26;28) in Abhängigkeit von den Komparatorsignalen und den Aktivierungssignalen, derart, daß die Stromversorgung zu einem bestimmten Verbraucher (10,12,14) aufrechterhalten wird, wenn der dem bestimmten Verbraucher (10,12,14) zugeordnete Meßwert größer als der Referenzwert ist und daß im anderen Fall die Stromversorgung unterbrochen wird.

2. Steuer- und Überwachungsgerät nach Anspruch 1, **gekennzeichnet durch** eine erste Einrichtung (92;94;96) zum Halten der Aktivierungssignale für eine vorbestimmte Zeit.

3. Steuer- und Überwachungsgerät nach Anspruch 1 oder 2, **gekennzeichnet durch** eine zweite Einrichtung (106;108;110) zum dauerhaften Halten der Aktivierungssignale.

4. Steuer- und Überwachungsgerät nach einem der Ansprüche 1 bis 3, **dadurch gekennzeichnet, daß** die Eingangssignale der Aktivierungseinrichtungen (80,82,88) über Betätigungselemente (82) erzeugt werden, welche in einem separaten Gehäuse (136) untergebracht sind, wobei diese Eingangssignale als elektromagnetische Wellen oder als elektrische Signale über elektrische Leitungen weitergebbar sind.

5. Steuer- und Überwachungsgerät nach einem der Ansprüche 1 bis 4, **dadurch gekennzeichnet, daß** die Betätigungselemente (82) der Aktivierungseinrichtungen (80,82,88) einen Empfänger für elektromagnetische Wellen enthält, welcher, zur Erzeugung von Eingangssignalen, mit elektromagnetischen Wellen eines Senders(84) beaufschlagbar ist.

6. Steuer- und Überwachungsgerät nach einem der Ansprüche 1 bis 5, **dadurch gekennzeichnet, daß** die Aktivierungseinrichtungen (80,82,88) Signalverarbeitungsmittel (80,88,90) aufweisen, durch welche die Eingangssignale in Übereinstimmung mit einem Standardcode umwandelbar sind.

7. Steuer- und Überwachungsgerät nach einem der Ansprüche 1 bis 6, **dadurch gekennzeichnet, daß** die Referenzwertgeber (68;70;72) einstellbare Potentiometer enthalten, welche Referenzwerte in Form von Spannungen liefern.

8. Steuer- und Überwachungsgerät nach einem der Ansprüche 1 bis 6, **gekennzeichnet durch** einen Microcontroller (138), durch welchen die Funktionen der Referenzwerterzeugung, des Vergleichs der Meßwerte mit den Referenzwerten sowie die Ansteuerung der Schalter (24;26;28) ausführbar sind.

9. Verfahren zur Steuerung und Überwachung von Betriebszuständen einzelner elektrischer Verbraucher eines Systems aus mehreren elektrischen Verbrauchern, mit den Verfahrensschritten:
(a) Einschalten der Ströme zu den einzelnen Verbrauchern (10,12,14),
(b) Erfassen der Ströme durch die einzelnen Verbraucher (10,12,14),
(c) Umwandeln dieser Ströme in entsprechende Meßwerte,
(d) Erzeugen von Referenzwerten,
(e) Vergleich der Meßwerte mit den erzeugten Referenzwerten,
(f) Beeinflussen der Stromversorgung zu den einzelnen Verbrauchern (10,12,14) in dem Sinne, daß
(f₁) die Stromversorgung zu einem bestimmten Verbraucher (10,12,14) aufrechterhalten wird, wenn der dem bestimmten Verbraucher (10,12,14) zugeordnete Meßwert größer als der zugehörige Referenzwert ist und
(f₂) die Stromversorgung zu einem bestimmten Verbraucher (10,12,14) automatisch unterbrochen wird, wenn der dem bestimmten Verbraucher (10,12,14) zugeordnete Meßwert kleiner als der zugehörige Referenzwert ist.
(g) Wiedereinschalten der Stromversorgung nach Wunsch zu einem oder mehreren bestimmten Verbrauchern (10,12,14).
